# EUROPEAN PATENT APPLICATION

(11) **EP 4 840 567 A1**
(43) Date of publication of application: **18.11.2026**
(21) Application number: 26178843.4
(22) Date of filing: 15.05.2026
(51) Int. Cl.: B23C 5/20, B23C 5/10, B23C 5/22

(54) **CUTTING INSERT AND CUTTING TOOL COMPRISING THE SAME**

(30) Priority: 14.05.2025 JP 2025080942
(71) Applicant: Tungaloy Corporation, Iwaki-shi, Fukushima 970-1144 (JP)
(72) Inventor: KOMATSU, Naoki, Iwaki-shi, Fukushima, 9701144 (JP)
(74) Representative: Vossius & Partner Patentanwälte Rechtsanwälte mbB

(57) **Abstract**

An abutment surface (40) of a cutting insert (10) is disposed so as to be perpendicular to an upper surface (17) and a lower surface (19), the abutment surface has at least a linear first portion in a top view as viewed from a side of the upper surface in a direction perpendicular to the lower surface, the minor cutting edge (22) has at least a linear second portion in the top view, an angle at which the linear first portion of the abutment surface is disposed and an angle at which the linear second portion of the minor cutting edge is disposed are different in the top view, and the angle of the second portion is different from the angle of the first portion such that an interior angle formed between the second portion and an imaginary straight line approximated and extended from the major cutting edge (21) is smaller than an interior angle formed between the first portion and the imaginary straight line.

## Description

### Background

### Field

The present invention relates to a cutting insert and a cutting tool comprising such cutting insert.

### Description of Related Art

When high-feed machining for a workpiece such as metal is performed using a cutting tool with a cutting insert mounted thereon, a double-sided insert for high-feed machining, which is designed from the viewpoints of the secure fastening of such insert and economic efficiency, may be employed (see JP5967330 B). In such double-sided insert, it can be said that an insert abutment surface (constraining surface) located below a minor cutting edge tends to be parallel to the central axis of the insert, and the insert abutment surface and the minor cutting edge tend to be disposed so as to overlap with each other in a top view of the insert.

On the other hand, the maximum depth of cut, the length of a major cutting edge, and the cutting angle of a cutting insert are important factors that affect the tool performance. In order to sufficiently secure these features, the abutment surface and an edge line of the major cutting edge of an insert may be designed so as to be disposed in a skew relationship (see, for example, WO2021/246321).

However, when attempting to employ the above-described design wherein the abutment surface and an edge line of the major cutting edge of the insert are disposed in a skew relationship, while maintaining the positional relationship between the minor cutting edge and the insert abutment surface as in WO2021/246321, a problem occurs wherein the length of the minor cutting edge decreases and the angular limitation during inclined machining increases, thereby making it difficult to achieve both of the above-described design and positional relationship. On the other hand, the cutting insert described in JP5967330 B lacks the degree of freedom, since its abutment surface is determined by the shape of the cutting edge; therefore, it would be possible to improve the usability of such cutting insert by configuring the abutment surface so as to have a zero clearance angle (i.e., so as to be parallel to the central axis of the insert) while improving the general versatility and the degree of freedom.

### Summary

Under the above-described circumstances, an object of the present invention is to provide a cutting insert capable of alleviating or eliminating the angular limitation in inclined machining, while achieving both: a design in which an insert abutment surface and an edge line of a major cutting edge are disposed in a skew relationship; and a predetermined positional relationship between a minor cutting edge and the insert abutment surface, with the clearance angle of the abutment surface being zero, as well as a cutting tool comprising such cutting insert.

An aspect of the present invention provides a cutting insert used for a cutting tool, the cutting insert including:
an upper surface which is a first end surface;
a lower surface which is a second end surface being an opposite surface of the upper surface;
a peripheral surface formed so as to connect the upper surface and the lower surface;
a major cutting edge and a minor cutting edge that are each formed in at least part of an intersecting region between the upper surface and the peripheral surface and an intersecting region between the lower surface and the peripheral surface;
an abutment surface formed on the peripheral surface; and
at least two flanks disposed above and below the abutment surface, wherein:
   the abutment surface is disposed so as to be perpendicular to the upper surface and the lower surface;
   the abutment surface has at least a linear first portion in a top view as viewed from a side of the upper surface in a direction perpendicular to the lower surface;
   the minor cutting edge has at least a linear second portion in the top view;
   an angle at which the linear first portion of the abutment surface is disposed and an angle at which the linear second portion of the minor cutting edge is disposed are different in the top view; and
   the angle of the second portion is different from the angle of the first portion such that an interior angle formed between the second portion and an imaginary straight line approximated and extended from the major cutting edge is smaller than an interior angle formed between the first portion and the imaginary straight line.

The above-described cutting insert has been conceived of by taking into consideration the problem in which, when the positional relationship between the minor cutting edge and the abutment surface is attempted to be maintained, the length of the minor cutting edge decreases and the angular limitation during inclined machining increases, in order to achieve both such positional relationship and the above-described design wherein the insert abutment surface and the major cutting edge are disposed in a skew relationship. By forming the angle of the linear first portion of the abutment surface and the angle of the linear second portion of the minor cutting edge so as to be different from each other in the top view, such that an interior angle formed between the second portion and an imaginary straight line approximated and extended from the major cutting edge is smaller than an interior angle formed between the first portion and the imaginary straight line, it becomes possible to achieve the secure abutment of the cutting insert, while increasing the length of the minor cutting edge. By increasing the length of the minor cutting edge of the cutting insert, it becomes possible to alleviate or eliminate the angular limitation during the inclined machining even when the insert abutment surface and the major cutting edge are designed so as to be disposed in a skew relationship.

In the above-described cutting insert, an extended line from the major cutting edge and an extended line from the minor cutting edge may intersect with each other so as to form an obtuse interior angle in the top view.

In the above-described cutting insert, an angle difference between the first portion and the second portion may be 0.2° or more and 10° or less.

In the above-described cutting insert, an angle difference between the first portion and the second portion may be 1° or more and 5° or less

In the above-described cutting insert, a step may be formed between a flank of the minor cutting edge and the abutment surface located below the flank.

In the above-described cutting insert, the step may become larger as it extends from the minor cutting edge side toward the major cutting edge side.

In the above-described cutting insert, the step may constantly become larger as it extends from the minor cutting edge side toward the major cutting edge side.

In the above-described cutting insert, an inclined surface may be provided between the flank of the minor cutting edge and the abutment surface.

In the above-described cutting insert, the minor cutting edge of the lower surface may be located further out than the major cutting edge of the upper surface, with respect to a center of the cutting insert, in the top view.

The above-described cutting insert may comprise an R-portion having a convex shape, the R-portion being formed between the major cutting edge and the minor cutting edge and at a position closer to the minor cutting edge with respect to an axial line passing through a center of a side on which the major cutting edge and the minor cutting edge are formed.

Another aspect of the present invention provides a cutting tool comprising the above-described cutting insert.

The above-described cutting tool may be a rotary cutting tool.

### Brief Description of Drawings

Fig. 1 is a perspective view showing a cutting tool according to an embodiment of the present invention.
Fig. 2 shows the cutting tool as viewed from a leading end side along the central axis.
Fig. 3 is a side view of the cutting tool.
Fig. 4 is a top view of a cutting insert according to an embodiment of the present invention, as viewed from an upper surface side in a direction perpendicular to a lower surface thereof.
Fig. 5 is a perspective view showing the cutting insert as viewed from a side from which an abutment surface is visible.
Fig. 6 is a side view showing the cutting insert as viewed from a side surface on which the abutment surface is located.
Fig. 7 is a top view showing a minor cutting edge and its surrounding portion, as viewed in a direction of the arrow in Fig. 6.
Fig. 8 is a view showing a cross-sectional shape of a portion denoted by reference symbol VIII in Fig. 4, in an enlarged manner.
Fig. 9 is a view showing a cross-sectional shape of a portion denoted by reference symbol IX in Fig. 4, in an enlarged manner.
Fig. 10 is a view showing an outline of the shape of a cutting insert mounted on a cutting tool.

### Detailed Description

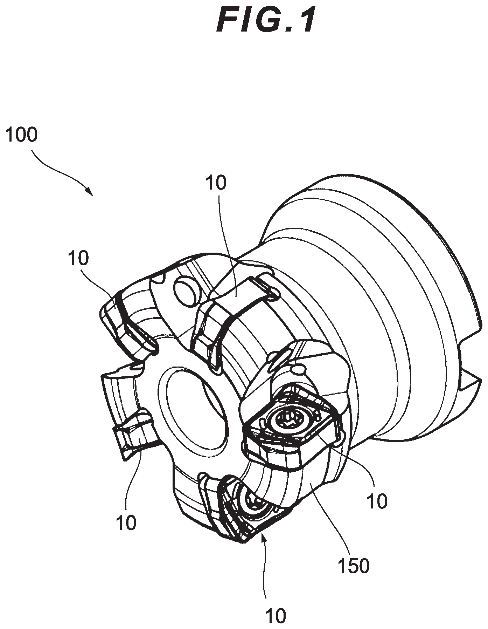

Preferred embodiments of a cutting insert and a cutting tool comprising such cutting insert according to the present invention will now be described in detail below, with reference to the attached drawings (see Fig. 1, etc.).

### <Outline of Cutting Insert>

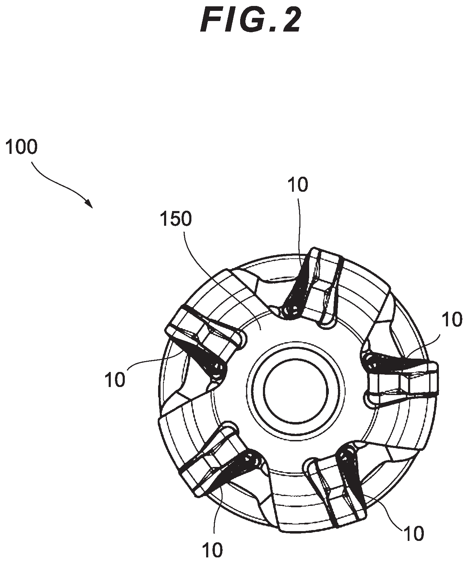

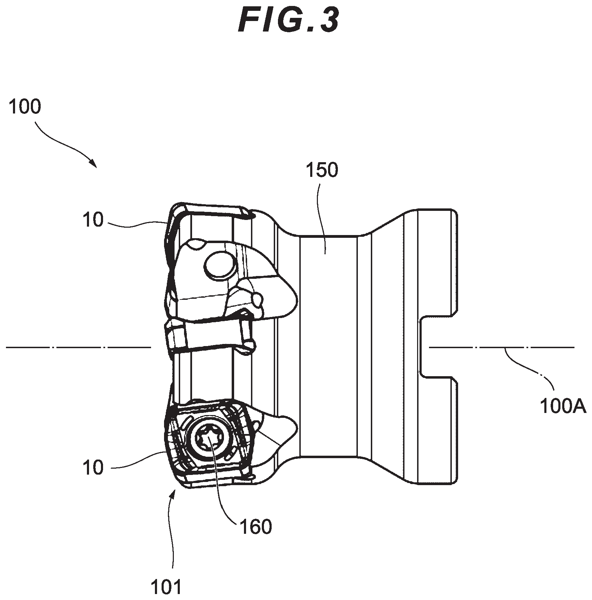

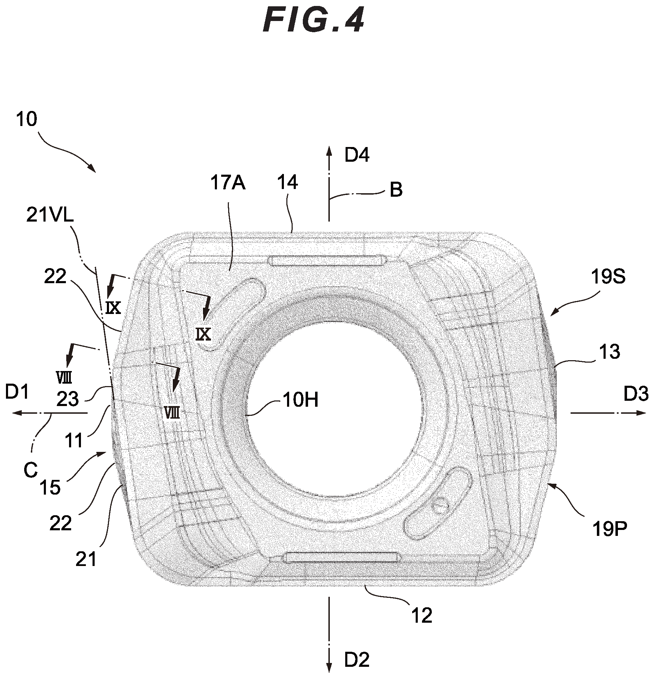

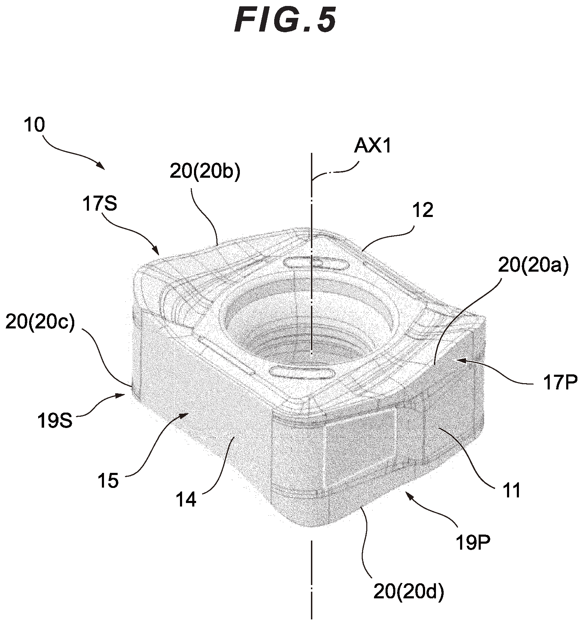

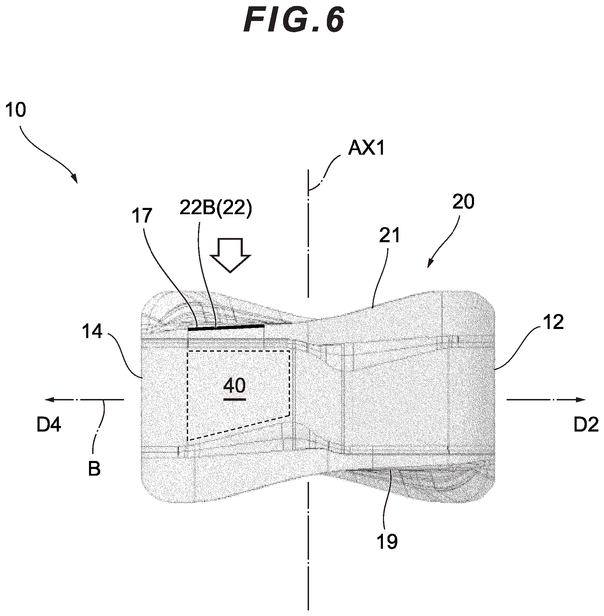

A cutting insert 10 shown in Fig. 4, etc. is configured as an insert which can be used in a reversible manner by inverting and mounting it on a tool body 150 (see Figs. 1-3) of a cutting tool 100 by using a male screw 160, etc. The cutting insert 10 of the present embodiment includes: an upper surface 17 (first end surface) which faces upward in the plane of paper of Fig. 6: a lower surface 19 (second end surface) which faces oppositely downward in the plane of paper; and a peripheral surface 15 formed so as to connect the upper surface 17 and the lower surface 19. The peripheral surface 15 includes a first peripheral surface portion 11, a second peripheral surface portion 12, a third peripheral surface portion 13 and a fourth peripheral surface portion 14 which connect the upper surface 17 and the lower surface 19. In a top view viewed from the upper surface 17 side in a direction perpendicular to the lower surface 19 (see Fig. 4), the shape of the upper surface 17 looks like a quadrangle or a hexagon. When considered as a quadrangle, the upper surface 17 has a substantially parallelogram shape or a shape approximate thereto, wherein a pair of substantially parallel side edges is longer than the other pair of substantially parallel side edges. When considered as a hexagon, the upper surface 17 has a shape wherein a pair of substantially parallel side edges is longer than the other two pairs of substantially parallel side edges. The cutting insert 10 has, at a central part thereof, a through hole 10H used for fastening the cutting insert 10 to the cutting tool 100, and such through hole 10H is formed so as to extend through the upper surface 17 and the lower surface 19 along a central axis A1 (see Figs. 4, 5, etc.).

The second peripheral surface portion 12 is a surface that faces in a second direction D2 which is perpendicular to the central axis AX1 and corresponds to the downward direction in the plane of paper of Fig. 4, and the second peripheral surface portion 12 is formed continuously to the respective long side edges of the upper surface 17 and the lower surface 19. The fourth peripheral surface portion 14 faces in a fourth direction D4 which is perpendicular to the central axis AX1 and corresponds to the upward direction in the plane of paper of Fig. 4, and the fourth peripheral surface portion 14 is formed continuously to the respective longer side edges of the upper surface 17 and the lower surface 19. The first peripheral surface portion 11 faces in a first direction D1 which corresponds to the leftward direction in the plane of paper of Fig. 4, and the first peripheral surface portion 14 is formed continuously to the respective shorter side edges of the upper surface 17 and the lower surface 19. The third peripheral surface portion 13 faces in a third direction D3 which corresponds to the rightward direction in the plane of paper of Fig. 4, and the first peripheral surface portion 14 is formed continuously to the respective shorter side edges of the upper surface 17 and the lower surface 19. The first direction D1 and the third direction D3 are parallel and opposite to each other, and are each perpendicular to the second direction D2 and the fourth direction D4 that are parallel and opposite to each other. The second peripheral surface portion 12 and the fourth peripheral surface portion 14 are formed so as to be planar or substantially flat and parallel to each other, except for portions on both ends thereof which respectively connect to the first peripheral surface portion 11 and the third peripheral surface portion 13 (see Fig. 4, etc.).

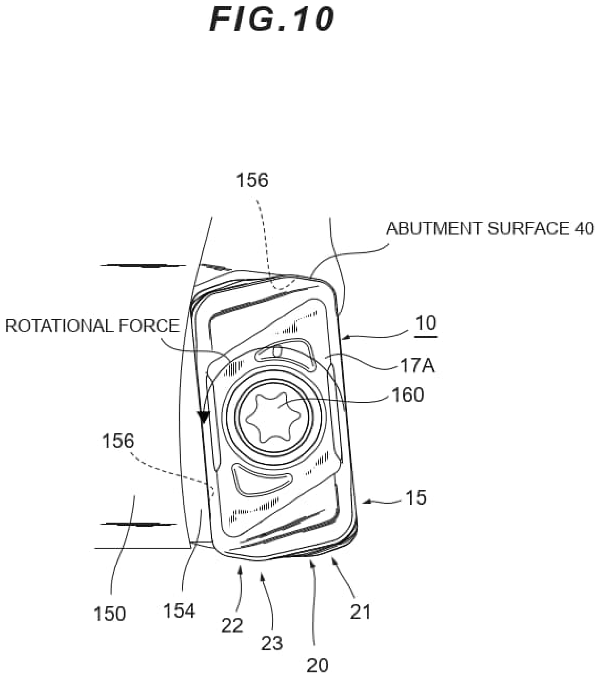

The upper surface 17 comprises a flat surface 17A formed so as to surround the through hole 10H (see Figs. 4 and 5). The flat surface 17A is a surface that abuts on a bottom surface of an insert seat 154 of the tool body 150 of the cutting tool 100 when machining is performed by using a cutting edge formed on the lower surface 19 side (see Fig. 10).

A cutting edge 20 is formed at least in part of a connecting region 17P between the upper surface 17 and the first peripheral surface portion 11 (see Fig. 5, etc.) Similarly, a cutting edge 20 is also formed at least in part of each of a connecting region 17S between the upper surface 17 and the third peripheral surface portion 13, a connecting region 19P between the lower surface 19 and the first peripheral surface portion 11, and a connecting region 19S between the lower surface 19 and the third peripheral surface portion 13. These four cutting edges 20 consist of cutting edge portions 20a-20d which are arranged at positions rotationally symmetric to each other with respect to all of the central axis AX1, an axial line B and an axial line C. The cutting edge portions 20a and 20b are formed in intersecting regions between the upper surface 17 and the peripheral surface 15 so as to be 180-degrees rotationally symmetric (point-symmetric) to each other with respect to the central axis A1. The other pair of cutting edge portions 20c and 20d are formed in intersecting regions between the lower surface 19 and the peripheral surface 15 so as to be 180-degrees rotationally symmetric to the pair of cutting portions 20a and 20b with respect to the axial line B or the axial line C (see Figs. 4 and 5). The other pair of cutting edge portions 20c and 20d are also formed so as to be 180-degrees rotationally symmetric to each other with respect to the central axis AX1. It should be noted that the axial line B is an axis which extends so as to be orthogonal to the central axis AX1 at the central point thereof (i.e., a point at an equal distance from the upper surface 17 and the lower surface 19) and extends in the second direction D2 and the fourth direction D4. The axial line C is an axis which extends so as to be orthogonal to the central axis AX1 and the axial line B at the central point of the central axis AX1 (i.e., a point at an equal distance from the upper surface 17 and the lower surface 19) (see Fig. 4, etc.).

For example, when the cutting edge portion 20a located at least in part of the intersecting region between the upper surface 17 and the first peripheral surface portion 11 is used for cutting and gets damaged, cutting can be performed using an unused cutting edge portion 20b located on the opposite side of the upper surface 17 by rotating the cutting insert 10 by 180 degrees about the central axis AX1. When both of the two cutting edge portions 20a and 20b located on the upper surface 17 are damaged, then cutting can be performed using one of unused cutting edge portions 20c and 20d located on the lower surface 19 by inverting the cutting insert 10 about the axial line B or the axial line C. In addition, by rotating the cutting insert 10 by 180 degrees in the same plane after inverting it, four cutting edge portions can be used (four times) in total. Since the cutting edge portions 20a-20d have the same configuration, the following description will describe, from among such cutting edge portions, the cutting edge portion 20a located in the intersecting region between the upper surface 17 and the first peripheral surface portion 11.

### <Configuration of Cutting Edge Portions, etc.>

The cutting edge portion 20a is provided with a major cutting edge 21 and a minor cutting edge (inner cutting edge) 22 that serve as the cutting edge 20 during cutting, and an R-portion 23 that is provided so as to be curved between the major cutting edge 21 and the minor cutting edge 22 (see Fig. 6, etc.). The minor cutting edge 22 is located closer to the fourth peripheral surface portion 14 with respect to the major cutting edge 21. It should be noted that R portions (corners) at the four corners of the periphery can be regarded as being included in the major cutting edge 21, although such portions are not denoted with reference symbols.

When the cutting insert 10 is mounted on the cutting tool 100, the major cutting edge 21 faces the peripheral side on an end surface of the cutting tool 100, so as to be suitable for flat surface machining. When the cutting insert 10 is mounted on the cutting tool 100, the minor cutting edge 22 faces the inner side of the cutting tool 100 and functions as a cutting edge suitable for ramping, etc. (the minor cutting edge is sometimes referred to as the "inner cutting edge"). When the cutting insert 10 is mounted on the cutting tool 100, the R-portion 23 faces one end surface side of the cutting tool 100 and functions as a wiper edge.

The first peripheral surface portion 11 (and the third peripheral surface portion 13) is provided with: portions that serve as flanks 21f and 22g of the cutting edge portion 20a; and a portion that serves as an abutment surface (constraining surface) 40 (see Figs. 4, 10, etc.). At least a part of the abutment surface 40 abuts on at least two portions of a side wall 1156 of an insert seat 154 of the tool body 150 of the cutting tool 100, with the two portions not being located on the central axis AX1, and the abutment surface 40 constrains the cutting insert 10 so as not to rotate about the central axis AX1 even when it receives reaction force (cutting force) from a workpiece during cutting and thereby receives moment acting thereon (see Fig. 10).

The major cutting edge 21 is formed on at least a part of an intersecting region between the upper surface 17 and the peripheral surface 15 (i.e., a connecting region 17P between the upper surface 17 and the first peripheral surface portion 11, in the case of the cutting edge portion 20a), and the minor cutting edge 22 is also formed on at least a part of the intersecting region between the upper surface 17 and the peripheral surface 15 (i.e., the connecting region 17P between the upper surface 17 and the first peripheral surface portion 11, in the case of the cutting edge portion 20a). The major cutting edge 21 is an inclined edge that is inclined substantially linearly or inclined so as to include a curved line that is convex upward, in a side view wherein the first peripheral surface portion is viewed in a direction facing thereto (see Fig. 4, etc.). The inclination angle of the major cutting edge 21 with respect to the flat surface 17A (i.e., the inclination angle at a straight line portion which is obtained by approximating a part of the major cutting edge 21) in Fig. 6 is set as appropriate according to the specification, etc. The major cutting edge 21 is formed so as to be gradually elevated in the thickness direction of the cutting insert 10 (i.e., the direction along the central axis AX1) as it extends away from the minor cutting edge 22 and approaches the second peripheral surface portion 12 (see Fig. 6, etc.).

### <Structure of Abutment Surface and Minor Cutting Edge>

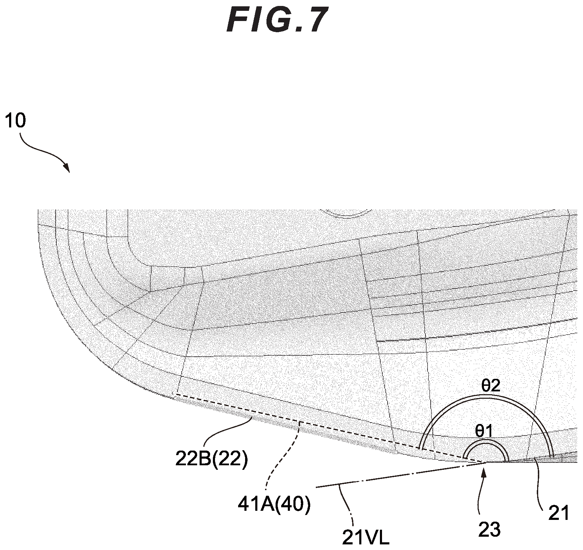

In the cutting insert 10 of the present embodiment, the abutment surface 40 is disposed so as to be perpendicular to the flat surface 19A of the lower surface 19. The abutment surface 40 has at least a linear first portion 41A in a top view (see Figs. 6 and 7). The minor cutting edge 22 has at least a linear second portion 22B in a top view. In addition, the angle at which the linear first portion 41A of the abutment surface 40 is disposed and the angle at which the linear second portion 22B of the minor cutting edge 22 is disposed are different from each other in the top view. More specifically, the angle of the second portion 22B is different from the angle of the first portion 41A, such that the interior angle formed between such second portion 22B and an imaginary straight line 21VL that is approximated and extended from the major cutting edge 21 is smaller than an interior angle formed between the first portion 41A and the imaginary straight line 21VL (see Fig. 7). In other words, when the interior angle formed between the linear first portion 41A and the imaginary straight line 21VL that is approximated and extended from the major cutting edge 21 is θ1, and the interior angle formed between the linear second portion 22B and the imaginary straight line 21VL that is approximated and extended from the major cutting edge 21 is θ2, the following relationship is satisfied: θ1 > θ2.

In this case, a difference between the angle at which the linear first portion 41A of the abutment surface 40 is disposed and the angle at which the linear second portion 22B of the minor cutting edge 22 is disposed (such angle difference is equal to the value obtained by θ1-θ2) may be in the range of between 0.2° and 10°, and is preferably in the range of between 1° and 5°. A preferred example of such angle difference is 1.2°.

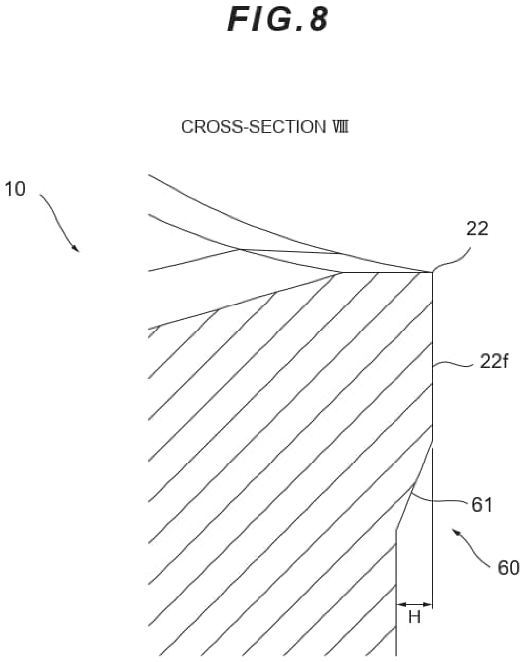

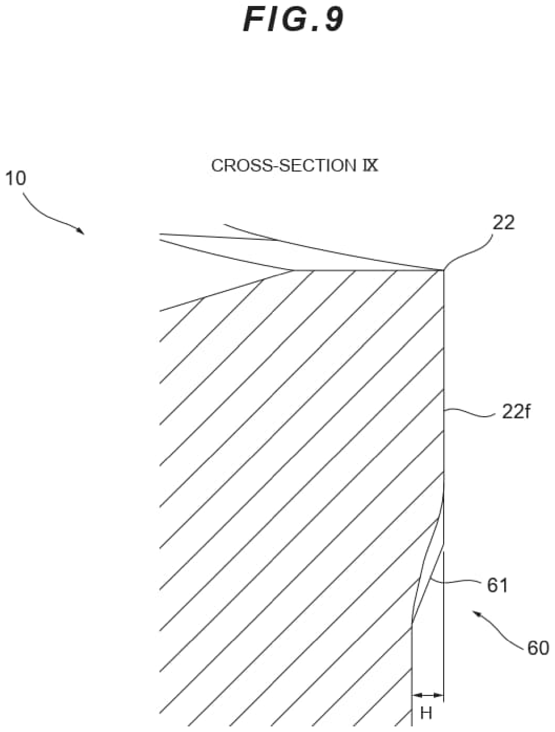

A step 60 is formed between a flank 22f of the minor cutting edge 22 and the abutment surface 40 located below such flank 22f (see Figs. 8 and 9). The step 60 is formed such that the minor cutting edge 22, or its flank 22f, protrudes outwardly with respect to the abutment surface 40 and, due to such configuration, the minor cutting edge 22 or its flank 22f is formed so as to have a so-called "overhung shape." Such step 60 may be formed in a stepped shape (cranked shape); however, in the cutting insert 10 of the present embodiment, the step 60 is formed by an inclined surface 61 formed between the flank 22f and the abutment surface 40 (see Figs. 8 and 9). In the cutting insert 10 of the present embodiment, (the size H) of the step 60 is formed so as to become larger from the minor cutting edge 22 side toward the major cutting edge 21 side. In this case, the rate of change of (the size H) of the step 60 may be constant (i.e., the rate of change of such size may be constant from the minor cutting edge 22 side toward the major cutting edge 21 side) or may be changed at a midpoint thereof.

In the cutting insert 10 of the present embodiment wherein the step 60 is formed between the flank 22f of the minor cutting edge 22 and the abutment surface 40 located below the flank 22f, and the minor cutting edge 22 or its flank 22f has a so-called "overhung shape" as described above, the minor cutting edge 22 of the lower surface 19 is located further out than the major cutting edge 21 of the upper surface 17, with respect to the center (central axis AX1) of the cutting insert 10, and such minor cutting edge 22 bulges outward, in a top view (see Fig. 4). Since the minor cutting edge 22 protrudes outward in an overhung shape with respect to the abutment surface 40 in the present embodiment, the minor cutting edge 22 of the lower surface 17 is visible in the top view (see Fig. 4); however, if the minor cutting edge 22 is located on the inner side with respect to the abutment surface 40, instead of being formed in an overhung shape, then the minor cutting edge 22 would not be visible in the top view. However, in such case, the positional relationship could be confirmed by using, for example, a transparent view (i.e., a view which shows a state in a transparent manner).

In such cutting insert 10, the R-portion 23 is formed in a convex shape at a position between the major cutting edge 21 and the minor cutting edge 22 and closer to the minor cutting edge 22 with respect to an axial line passing through the center of a side on which these major cutting edge 21 and minor cutting edge 22 are formed (see Figs. 4 and 7). It should be noted that the shape of the R-portion 23 is not limited to the arc-like shape and such R-portion 23 may be further provided with, for example, a linear wiper edge. Alternatively, the R-portion 23 may not be rounded and only a linear wiper edge may be formed as a corner part.

As described above, in the cutting insert 10 of the present embodiment, the abutment surface 40 located below the minor cutting edge 22 is parallel to the central axis AX1 of the insert, and the angle of the minor cutting edge 22 is arranged so as to be larger than the angle of the abutment surface 40 located below the minor cutting edge 22 in the top view, which makes it possible to securely constrain the cutting insert 10 on the insert seat 154, while increasing the length of the minor cutting edge 22. In general, the cutting insert 10 faces a problem in which, when an attempt is made to maintain the positional relationship between the minor cutting edge 22 and the abutment surface 44, the length of the minor cutting edge 22 decreases, which increases the angular limitation during inclined machining. In this regard, by employing a configuration in which: the linear first portion 41A of the abutment surface 40 and the linear second portion 22B of the minor cutting edge 22 are formed so as to be different from each other; and the interior angle θ2 formed by the linear second portion 22B and the imaginary straight line 21V approximated and extended from the major cutting edge 21 is smaller than the interior angle θ1 formed by the linear first portion 41A and the imaginary straight line 21V approximated and extended from the major cutting edge 21 (θ2 < θ1) as described above, it becomes possible to increase the length of the minor cutting edge 22. According to such cutting insert 10, the angular limitation during inclined machining (ramping) can be alleviated or eliminated even under the layout design in which the abutment surface 40 and the major cutting edge 21 are arranged in a skew relationship. More specifically, during inclined machining (ramping), three cutting steps, i.e., (a) peripheral cutting by the major cutting edge 21, (b) bottom cutting by the R-portion 23, and (c) ramping by the minor cutting edge 22, are performed simultaneously, and the performance of (c) ramping by the minor cutting edge 22 can be improved by using the cutting insert 10 having the above-described configuration. As a specific example, the inclination angle of less than 1° during ramping can be increased to about 1.5° by employing the cutting insert 10 having the above-described configuration.

### <Outline of Cutting Tool>

The cutting insert 10 described above is mounted on the insert seat 154 of the cutting tool 100 for use in cutting (see Figs. 1, 10, etc.). The insert seat 154 includes a bottom surface, and a female screw is formed so as to open in the bottom surface. By screwing the male screw 160 extending through the through hole 10H of the cutting insert 10 into such female screw and causing the head of the male screw 160 to press a wide diameter portion inside the through hole 10H so as to cause the cutting insert 10 to approach at least two portions of the side wall 156 which are not located on the central axis AX1, and to cause the flat surface 19A formed in the lower surface 19 to abut on the bottom surface of the insert seat 154, the cutting insert 10 is fixed to the tool body 150. The cutting tool 1 is used as a rotary cutting tool such as a drill, or a milling cutter (milling tool), and is also used as a high-feed cutter.

Although the embodiment described above is an example of preferred embodiments of the present invention, the present invention is not limited thereto, and various modifications may be made without departing from the gist of the present invention. For example, although the cutting insert 10 provided with the through hole 10H has been described as an example in the above-described embodiment, such cutting insert is merely a preferred example, and the present invention may be applicable to a cutting insert 10 having no through hole 10H, although such cutting insert is not particularly shown in the drawings.

The present invention is suitable for use in a cutting insert and a cutting tool comprising such cutting insert.

## Claims

1. A cutting insert used for a cutting tool, the cutting insert comprising:
an upper surface which is a first end surface;
a lower surface which is a second end surface being an opposite surface of the upper surface;
a peripheral surface formed so as to connect the upper surface and the lower surface;
a major cutting edge and a minor cutting edge that are each formed in at least part of an intersecting region between the upper surface and the peripheral surface and an intersecting region between the lower surface and the peripheral surface;
an abutment surface formed on the peripheral surface; and
at least two flanks disposed above and below the abutment surface, wherein:
the abutment surface is disposed so as to be perpendicular to the lower surface;
the abutment surface has at least a linear first portion in a top view as viewed from a side of the upper surface in a direction perpendicular to the lower surface;
the minor cutting edge has at least a linear second portion in the top view;
an angle at which the linear first portion of the abutment surface is disposed and an angle at which the linear second portion of the minor cutting edge is disposed are different in the top view; and
the angle of the second portion is different from the angle of the first portion such that an interior angle formed between the second portion and an imaginary straight line approximated and extended from the major cutting edge is smaller than an interior angle formed between the first portion and the imaginary straight line.

2. The cutting insert according to claim 1, wherein an extended line from the major cutting edge and an extended line from the minor cutting edge intersect with each other so as to form an obtuse interior angle in the top view.

3. The cutting insert according to claim 1 or 2, wherein an angle difference between the first portion and the second portion is 0.2° or more and 10° or less.

4. The cutting insert according to claim 3, wherein an angle difference between the first portion and the second portion is 1° or more and 5° or less.

5. The cutting insert according to any one of claims 1 to 4, wherein a step is formed between a flank of the minor cutting edge and the abutment surface located below the flank.

6. The cutting insert according to claim 5, wherein the step becomes larger as it extends from a side of the minor cutting edge toward a side of the major cutting edge.

7. The cutting insert according to claim 6, wherein the step constantly becomes larger as it extends from the side of the minor cutting edge toward the side of the major cutting edge.

8. The cutting edge according to any one of claims 5 to 7, wherein an inclined surface is provided between the flank of the minor cutting edge and the abutment surface.

9. The cutting insert according to any one of claims 1 to 8, wherein the minor cutting edge of the lower surface is located further out than the major cutting edge of the upper surface, with respect to a center of the cutting insert, in the top view.

10. The cutting insert according to any one of claims 1 to 9, comprising an R-portion having a convex shape, the R-portion being formed between the major cutting edge and the minor cutting edge and at a position closer to the minor cutting edge with respect to an axial line passing through a center of a side on which the major cutting edge and the minor cutting edge are formed.

11. A cutting tool, comprising the cutting insert according to any one of claims 1 to 10.

12. The cutting tool according to claim 11, wherein the cutting tool is a rotary cutting tool.
